# EUROPÄISCHE PATENTSCHRIFT

(11) **EP 3 146 310 B1**
(45) Veröffentlichungstag und Bekanntmachung des Hinweises auf die Patenterteilung: **28.03.2018**
(21) Anmeldenummer: 15730695.2
(22) Anmeldetag: 20.05.2015
(51) Int. Cl.: G01N 17/04, F16B 4/00

(54) **KORROSIONSSONDE UND VERFAHREN ZUM EINBAU EINER KORROSIONSSONDE**
CORROSION PROBE AND METHOD FOR INSTALLING A CORROSION PROBE
SONDE DE CORROSION ET PROCÉDÉ DE MONTAGE D'UNE SONDE DE CORROSION

(30) Priorität: 23.05.2014 DE 102014007753
(43) Veröffentlichungstag der Anmeldung: 29.03.2017
(73) Patentinhaber: Steinmüller Babcock Environment GmbH, 51643 Gummersbach (DE)
(72) Erfinder: ZORBACH, Ingo, 51588 Nümbrecht (DE); PRIESMEIER, Ulrich, 51643 Gummersbach (DE)
(74) Vertreter: Carstens, Dirk Wilhelm
(86) Internationale Anmeldenummer: PCT/EP2015/061178
(87) Internationale Veröffentlichungsnummer: WO 2015/177245

(56) Entgegenhaltungen:
- DE-A1-102010 003 574
- DE-B3-102012 107 792
- US-A- 3 980 542
- US-A1- 2002 117 401

## Beschreibung

Die Erfindung betrifft eine Sonde zur elektrochemischen Korrosionsmessung an einer Kessel- oder Wärmetauscherwand in Rohr-Steg-Rohr-Konstruktion, wobei die Sonde zylindrisch ausgebildet ist und einen Abschnitt zur Aufnahme in einer Bohrung in einem Steg der Kesselwand aufweist.

Es ist bereits vorgeschlagen Sonden zur Korrosionsmessung in die Kesselwand (die im Fachgebiet auch als Membranwand bezeichnet wird) eines Kessels einzubauen. Die Montage solcher Sonden ist oft jedoch sehr aufwendig und erfordert ggf., dass die Sonden räumlich getrennt vom Kessel in der Werkstatt in ein Teilstück der Kesselwand (zwei Rohre mit Steg dazwischen) eingebaut werden und dann im Kesselhaus in die Wand des Kessels eingeschweißt werden. Durch einen solchen Einbau kommt es zu unerwünschten Veränderungen am Druckteil des Kessels.

Aus der EP 2 325 621 A1 ist eine stabförmige Korrosionssonde bekannt, die in der Kesselwand angeordnet ist. Die bekannte Sonde besteht aus zwei Teilen, nämlich einem Korrosionssensor und einer Lanze. Der Korrosionssensor besteht aus Elektroden und einem Elektrodenträger in Gestalt des Sensorkopfs. Die Elektroden haben eine Kreissektorform und sind an der Spitze der Lanze angebracht. Die Elektroden sind durch Keramikröhrchen oder eine sonstige Ummantelung und Keramikkleber voneinander und von dem Elektrodenträger isoliert. Die Lanze besteht aus drei konzentrischen Rohren mit innen liegendem Kühlkörper zur Erhöhung der inneren Oberfläche. Der Aufbau dieser bekannten Sonde benötigt eine aufwendige, aktive Temperiereinrichtung, um die Temperatur der Elektroden auf die Temperatur der Kesselwand herunter zu kühlen.

Aus der EP 2 700 932 A2 ist eine Korrosionssonde für einen Wandabschnitt in Roh-Steg-Rohrkonstruktion bekannt, bei dem mehrere plattenförmige Elektroden zur elektrochemischen Bestimmung der Korrosion vorgesehen sind. Die plattenförmigen Elektroden sind nebeneinander in einem elektrisch isolierenden, im wesentlichen rechteckigen Trägerteil angeordnet, das zur Anbringung in einem Zwischenraum (Steg) zwischen zwei benachbarten Rohren des Wandabschnitts eingerichtet ist. Das Trägerteil soll durch eine stoffschlüssige und/oder kraftschlüssige und/oder formschlüssige Verbindung eingesetzt und insbesondere Gasdicht mit dem Steg verbunden werden. Wie diese Verbindung aufgebaut werden sollen wird nicht offenbart.

Weiterhin ist aus der US 6,478,948 ein Verfahren zur Korrosionsüberwachung in einem Kessel bekannt, bei dem eine Sonde in den Steg einer Kesselwand mit Rohr-Steg-Rohr-Konstruktion durch eine an der äußeren Kesselwand angreifenden Halteklammer befestigt wird.

Es ist die Aufgabe der Erfindung eine vereinfachte Befestigung einer Sonde zur elektrochemischen Korrosionsmessung an einer Kessel- oder Wärmetauscherwand zu schaffen, bei der zudem eine aufwendige Temperierung der Sonde vermeidbar ist.

Diese Aufgabe wir durch eine erfindungsgemäße Anordnung gelöst, bei der der in der Bohrung befindliche Abschnitt als ein Befestigungsabschnitt zum Befestigen der Sonde in dem Steg ausgebildet ist und dieser Befestigungsabschnitt mit einer Keramikschicht beschichtet ist, die die Sonde elektrisch gegenüber der Kesselwand isoliert, und wobei der beschichtete Befestigungsabschnitt in einem gekühlten Zustand einen ersten Durchmesser aufweist, der kleiner ist als der Durchmesser der Stegbohrung, und im eingebauten Zustand nach Wiedererwärmung einen zweiten größeren Durchmesser aufweist derart, dass zumindest zwischen einem Teil des beschichteten Befestigungsabschnitts und der Stegbohrung Presspassung vorhanden ist.

Durch die Presspassung zwischen dem beschichteten Befestigungsabschnitt und der Stegbohrung wird zum einen eine einfache Befestigung vorgesehen und zum anderen wird eine thermische Kopplung von Sonde und Kesselwand ermöglicht und gleichzeitig die Sonde in der Kesselwand elektrisch isoliert montiert. Eine Temperiervorrichtung für die Temperaturregelung bei einer elektrochemischen Korrosionsmessung an der Kesselwand wie im Stand der Technik erübrigt sich, da durch die geringe Dicke der Keramikschicht (bevorzugterweise liegt die Dicke zwischen 50µm bis 200µm) und der daraus resultierende thermischen Kopplung eine bei bekannten Sonden übliche deutliche Erwärmung gegenüber der Kesselwand nicht auftritt. Die vorgeschlagene Montage der Sonde erfordert zudem keine Veränderungen an Druckteilen des Kessels. Auch kann die erfindungsgemäße Sonde während des Betriebes des Kessels montiert werden, da die Bohrung nicht in das Druckteil des Kessels sondern in den unbelasteten Steg der Kesselwand erfolgt.

Vorzugsweise weist die Sonde einen Kesselabschnitt auf, der sich an den Befestigungsabschnitt anschließt, und im eingebauten Zustand der Sonde in den Kessel hineinragt. Dies dient dazu, in einem definierten Abstand zu der Kesselwandoberfläche die Korrosionsmessung vorzunehmen.

Bevorzugterweise weist die Sonde einen auf der Außenseite des Stegs liegenden Abschnitt mit einem Durchmesser auf, der größer ist als der Durchmesser der Bohrung, und der mit dem Befestigungsabschnitt einen Absatz bildet. Dieser Absatz liegt im eingebauten Zustand der Sonde an der Außenseite des Stegs an und definiert so die Einbautiefe der Sonde, wobei sich die Keramikbeschichtung auch über den Absatz erstreckt. Der Absatz ist beim Einbau ein Hilfsmittel, um eine korrekte und wiederholbare Einbautiefe sicherzustellen. Damit ist gewährleistet, dass alle Sonden identisch eingebaut und thermisch belastet werden. Dies verhindert Temperaturschieflagen zwischen den Sonden und daraus resultierende Falschmessungen.

Die-Sonde ist bevorzugterweise als Hohlkörper ausgebildet und ein Thermoelement zur Erfassung der Sondentemperatur im KesseJ- und/oder Befestigungsabschnitt ist in dem Hohlraum angeordnet. Hierdurch kann zum Beispiel der Verlauf der Abkühlphase der Sonde während des Einschrumpfens der Sonde und der Verlauf der Aufwärmphase nach dem Einbau erfasst und aufgezeichnet werden.

Die Erfindung betrifft auch eine Anordnung zur elektrochemischen Korrosionsmessung in einem Kessel, die mindestens zwei solche Sonden aufweist. Vorteilhafterweise können mehrerer Sonden einzeln in definierten Abständen zu einander montiert werden, um Spannungspotentiale zwischen den Sonden zu Messen. Da die Sonden einzeln eingebaut werden, können die Sonden gegenüber einer Konstruktion, bei der mehrer Sonden in einer Lanze zusammen montiert werden, kleinere Einzelradien aufweisen, was eine Montage in Stegen mit geringer Breite ermöglicht.

Die Erfindung betrifft weiterhin ein Verfahren zum Einbau einer solchen Sonde in einem Kessel, wobei das Verfahren die Folgenden Schritte aufweist:
Kühlen der Sonde auf eine erste Temperatur,
Einführen der Sonde in die Bohrung im Steg der Kesselwand,
Aufwärmen der Sonde auf eine zweite Temperatur, wodurch die Sonde mittels der Presspassung in dem Steg der Kesselwand gehalten wird.

Weitere vorteilhafte Ausführungsformen der Erfindung sind in Unteransprüchen definiert.

Die Erfindung soll nun anhand der beigefügten Figuren erläutert werden:
Fig.1 zeigt Schnittansicht einer Ausführungsform der erfindungsgemäßen Sonde im montierten Zustand in einer Kesselwand bei der die Dicke der Keramikschicht übertrieben dargestellt ist.
Fig.2 zeigt eine perspektivische Ansicht einer Ausführungsform einer erfindungsgemäßen Anordnung von mehreren in der Kesselwand montierten Sonden mit zwei Schnittebenen senkrecht zur Kasselwand und durch die Sonden, und zwar aus dem Kesselraum heraus.
Fig.3 zeigt eine perspektivische Ansicht der Ausführungsform der Anordnung gemäß Fig.2 von Außen auf die Kesselwand, und
Fig.4 zeigt eine perspektivische Ansicht der Ausführungsform der Anordnung gemäß Fig.2 vom Kesselinneren auf die Kesselwand.

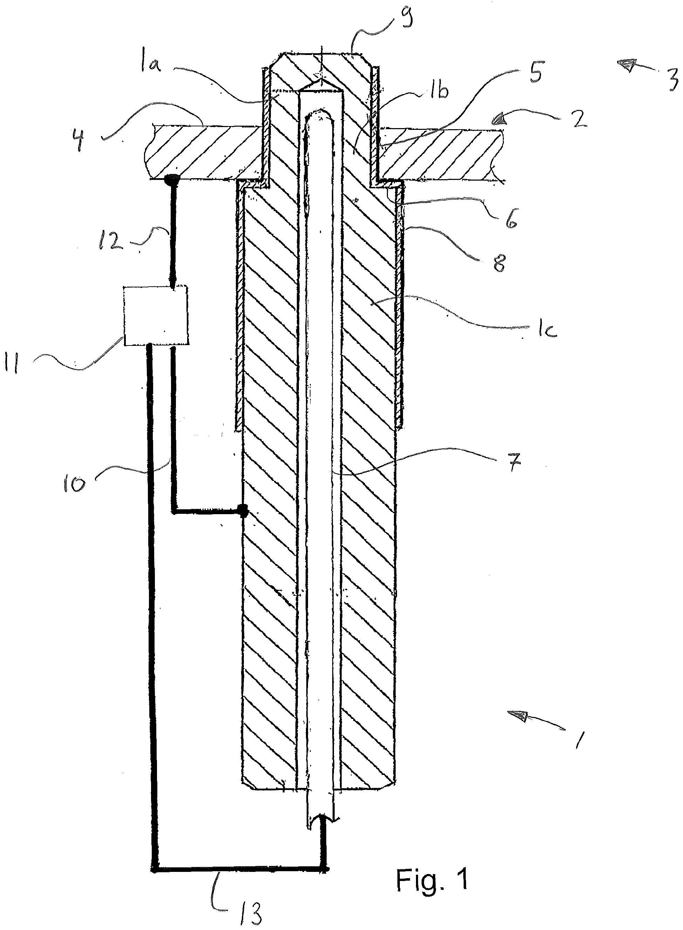

In der Fig. 1 ist eine aus Metall gefertigte und als Elektrode wirkende Sonde 1 zur elektrochemischen Korrosionsmessung gezeigt, die an einer Kesselwand 2 montiert ist. Auch wenn in den folgenden Ausführungsbeispielen und Ansprüchen auf einen Kessel Bezug genommen wird, treten ähnliche Korrosionsprobleme bei Wärmetauschern auf. Die nachfolgende Beschreibung und Ansprüche richten sich daher auch auf Anordnungen und Verfahrensweisen für die Korrosionsmessung an einer Membranwand eines Wärmetauschers.

Die Kesselwand bzw. Membranwand weist eine an sich bekannte Rohr-Steg-Rohr-Konstruktion auf und ist Teil eines Dampferzeugers bzw. Kessels 3, der zum Beispiel mit fossilen Brennstoffen befeuert wird.

In der Figur 1 ist lediglich ein Teil eines Stegs 4 dargestellt, mit einer darin befindlichen Bohrung 5. Die Bohrung 5 hat einen vorbestimmten Bohrungsdurchmesser und bildet eine Öffnung zum Kesselinnenraum, wobei - wie unten beschrieben - die Sonde 1 eingeschrumpft wurde und so mittels Klemmpassung in die Kesselwand 2 montiert ist.

Die Sonde weist einen Kesselabschnitt 1a auf, der in dem montierten Zustand in den Kesselinnenraum ragt. An den Kesselabschnitt 1a schließt sich ein in der Bohrung 5 liegender Befestigungsabschnitt 1b an, der mit der Innenoberfläche der Bohrung 5 in Presspassung steht. Der Kesselabschnitt 1a und der Befestigungsabschnitt 1b haben bevorzugterweise den gleichen Radius. Am Befestigungsabschnitt 1b schließt sich ein Abschnitt 1c der Sonde an, der im montierten Zustand außerhalb des Kessels 3 liegt und gegenüber dem Befestigungsabschnitt 1b einen größeren Durchmesser besitzt. Hierdurch bildet sich im Übergangsbereich zum Befestigungsabschnitt 1b ein Absatz 6. Der Absatz 6 dient beim Einbau als Hilfe für eine korrekte und wiederholbare Einbautiefe. Damit ist gewährleistet, dass eine einzelne Sonde 1 zu unterschiedlichen Messzeiten oder - wenn mehrere Sonden verwendet werden - alle Sonden identisch eingebaut und thermisch belastet werden. Dies verhindert Temperaturschieflagen zwischen einzelnen Sonden und daraus resultierende Falschmessungen.

Der Kesselabschnitt1a, der Befestigungsabschnitt 1b und der auf der Außenseite des Stegs befindliche Abschnitt 1c sind bevorzugterweise einstückig aus einem metallischen Rohrmaterial hergestellt, wobei das Rohmaterial wenn möglich dasselbe ist, wie das Material der Kesselwand 2 (bzw. des durch die Korrosionssonde zu untersuchenden Materials). Die Sonde 1 ist bevorzugterweise ein zylindrischer Hohlkörper, der geeignet ist ein Thermoelement 7 aufzunehmen, um die Temperatur im Kesselabschnitt 1a und/oder Befestigungsabschnitt 1b aufzuzeichnen. Durch die runde Form der Sonde 1 und dem relativ kleinen Radius des Kessel- und Befestigungsabschnitts 1a, 1b ist ein Einbau der Sonde 1 in einer Stegbohrung eines schmalen Stegs 4 der Kesselwand 2 möglich. Der Einbau kann somit auch in einem im Betrieb befindlichen Kessel erfolgen, da die Bohrung nicht in das Druckteil, sondern in den unbelasteten Steg erfolgt.

Bevorzugterweise wird das Thermoelement 7 bereits in den Sondenköper eingebaut, bevor die Sonde 1 eingeschrumpft wird. Dadurch besteht die Möglichkeit, die Abkühlungsphase beim Einschrumpfen und die Aufwärmphase der Sonde aufzeichnen zu können.

Damit die Sonde 1 nicht mit der Kesselwand 2 elektrisch verbunden wird, ist die Sonde im Bereich des Befestigungsabschnitts 1b und des Absatzes 6 durch eine keramische Schutzschicht 8 elektrisch von der Kesselwand 2 isoliert. Die in der Figur 1 dargestellt Schichtdicke ist nicht maßstabsgetreu sondern wurde zum Zwecke der Darstellung überhöht.

Die Dicke der Schicht ist so gewählt, dass die elektrische Isolation gewährleistet ist, zugleich aber eine thermische Kopplung an die Kesselwand 2 gewährleistet ist, also eine Wärmeeinkopplung über den Kesselsteg 4 und die Keramikschicht 8 in die Sonde 1 erfolgt. Insbesondere wird die Dicke der Schicht so gewählt, dass die Sonde in dem Bereich, im dem das Korrosions-Messsignal abgefühlt wird (d.h. die Spitze der Sonde 1), näherungsweise die gleiche Temperatur besitzt wie die Kesselinnenwand. Dies ist insbesondere bei den Wärmestromdichten wichtig, die in der Kesselwand 2 vorliegen, da die Sonde 1 zumindest im Bereich des Kesselabschnitts 1a sonst deutlich wärmer werden würde als die Kesselwand 2.

Die Keramikschicht 8 besteht bevorzugterweise aus Aluminiumoxid, Al₂O₃, und wird bevorzugt mit einem Plasmaspritzverfahren aufgebracht. Das Aufspritzen erfolgt vorzugsweise mit Übermaß. Das überschüssige Material wird nach dem Aufspritzen der Schicht durch Abschleifen abgetragen, um die Maße der Passung im Steg 4 zu erreichen und eine hohe Oberflächengüte zu erzielen. Die bevorzugte Dicke der Keramikschicht 8 liegt hierbei zwischen 50µm bis 200µm, um folgende Randbedingungen festzulegen: eine Mindestdicke von 50µm, um einen elektrischen Widerstand von mindestens 7 MegaOhm zu gewährleisten und eine Maximaldicke 200µm, um die Temperaturdifferenz zwischen Sonde und Steg 4 auf maximal 10K zu begrenzen. Die Schichtdicke der Keramikschicht 8 ist dabei so ausgelegt, dass sie die mechanische Beanspruchung durch das Abkühlen/Erwärmen beim Einbau der Sonde 1 und bei Temperaturwechseln im Betrieb des Kessels 3 überstehen kann.

Die Keramikschicht 8 erstreckt sich bevorzugterweise auch zumindest teilweise über die Oberfläche des Kesselabschnitts 1a, wodurch optimalerweise die Messung an der Frontfläche der Sonde erfolgt. Allerdings ist es auch gemäß alternativern Ausführungsbeispielen möglich keine Beschichtung auf dem Kesselabschnitt vorzusehen und somit die gesamte Oberfläche des Kesselabschnitts zur Messung zu nutzen. Weiter wird eine Beschichtung auf dem auf der Außenseite des Stegs befindlichen Abschnitt 1c der Sonde aus fertigungstechnischen Gründen bei der Beschichtung bevorzugt.

Zur Korrosionsmessung ist zumindest eine Spitze 9 des Kesselabschnitts 1a in einem definierten Bereich frei von Keramik und bildet eine Elektrodenfläche. Das für die Korrosionsmessung an der Spitze abgefühlte elektrochemische Rauschen wird über eine Leitung 10 an einen Korrosionsmonitor 11 geliefert. Der Korrosionsmonitor 11 kann über Leitung 12 das Potential des Stegs 4 erfassen. Wenn es die Korrosionsmessung erfordert, kann der Korrosionsmonitor 11 bevorzugterweise mit mindestens zwei weiteren Sonden (in Figur 1 nicht dargestellt) zur Korrosionsmessung elektrische verbunden werden. Weiterhin ist der Korrosionsmonitor über Leitung 13 mit dem innenliegende Thermoelement 7 verbunden, um die durch das Thermoelement 7 gemessen Temperaturen auszulesen.

Im Folgenden wird nun das erfindungsgemäße Verfahren für den Einbau der oben beschriebenen Sonde 1 in die Kesselwand 2 beschrieben. Die Sonde 1 wird zunächst in einem unmontierten Zustand auf eine erste Temperatur gekühlt. Bevorzugterweise wird die Sonde durch Einbetten in Trockeneis auf ca. -75°C abgekühlt, wobei durch das Thermoelement 7 der Abkühlvorgang überwacht werden kann. Der Durchmesser des beschichteten Kesselabschnitts 1a und des beschichteten Befestigungsabschnitts 1b ist so dimensioniert, dass er im abgekühlten Zustand kleiner ist als der Radius der Bohrung 5. Bei der bevorzugten Abkühlung mit Trockeneis bleiben thermischen Spannung in einem kontrollierbaren Rahmen und gefährden nicht die Stabilität der Keramikschicht 8.

Gemäß einem weiteren Ausführungsbeispiel kann jedoch auch mit anderen Kältemitteln wie zum Beispiel mit Flüssiggas, vorzugsweise flüssiger Luft, flüssigem Stickstoff, oder einem vergleichbaren kryogenen Medium, oder einer Kältemischung gearbeitet werden. Bei Verwendung von einer Kältemischung können Temperaturen zwischen 0°C und bis zu -100°C erreicht werden. Bevorzugterweise wird mit Mischungen aus Wassereis/CaCl2 (ca. -40°C) oder Wassereis/MgCl2 (ca. -34°C) gearbeitet. Gegebenenfalls kann hierdurch eine höhere Radiusreduktion beim Abkühlen und damit eine höhere Klemmkraft nach der Aufwärmung erzielt werden.

Nach dem Abkühlen wird die Sonde dann aus dem Trockeneisbett herausgenommen und direkt in die vorbereitete Bohrung 5 im Steg 4 der Kesselwand 2 eingeführt. Die Sonde 1 wird nun passiv durch die Kesselwand 2 auf eine zweite Temperatur aufgewärmt. Eine aktive Aufwärmung durch zusätzliche Wärmequellen ist nicht erforderlich. Durch das Aufwärmen wird die Sonde mittels der Presspassung in dem Steg 4 der Kesselwand 2 gasdicht gehalten. Die zweite Temperatur ist die allgemeine Umgebungstemperatur von ca. 20 C°, wenn die Sonde in einen kalten (dass heißt nicht im Betrieb befindlichen) Kessel 3 eingebaut wird oder entspricht der Temperatur der Kesselinnenwand des befeuerten Kessel 3, wenn sich der Kessel 3 im Betrieb befindet. Während die Radien der Bohrung 5 und des beschichteten Befestigungsabschnitts 1b so gewählt sind, dass bereits bei Umgebungstemperatur eine für das Halten der Sonde 1 ausreichende Klemmkraft entsteht, ist die Presspassung bei Kesselbetriebstemperatur maximal.

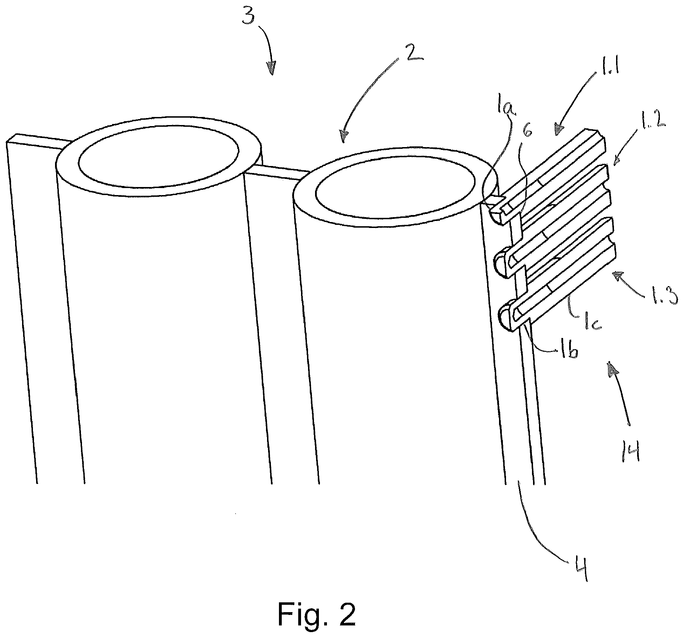

In den Figuren 2 bis 4 wird gemäß einem weiteren Ausführungsbeispiel der Erfindung eine Anordnung 14 mit mehreren Sonden 1.1, 1.2 und 1.3 in einer Kesselwand 2 vorgesehen. Der Aufbau der in den Figuren 2- 4 dargestellten Sonden 1.1, 1.2 und 1.3 entspricht dem der in Figur 1 dargestellten Sonde 1, wobei zum Zwecke der einfachen Darstellung das in Figur 1 dargestellte Thermoelement 7 sowie die Verkabelung mit einem Korrosionsmonitor 11 nicht dargestellt ist und die Keramikschicht 8 nur skizziert ist. Die dargestellte Anzahl von drei Sonden ist lediglich beispielhaft. Zwingend erforderlich ist zumindest eine Sonde, in diesem Fall dient dann der Steg als Gegenelektrode wie bezüglich Figur 1 beschrieben. Bei einer Verwendung von zwei oder mehr Sonden ist die Erfassung des Stegpotentials optional. Die Figuren zeigen drei Sonden 1.1, 1.2 und 1.3, die übereinander und äquidistant in einem einzelnen Steg 4 angeordnet sind.

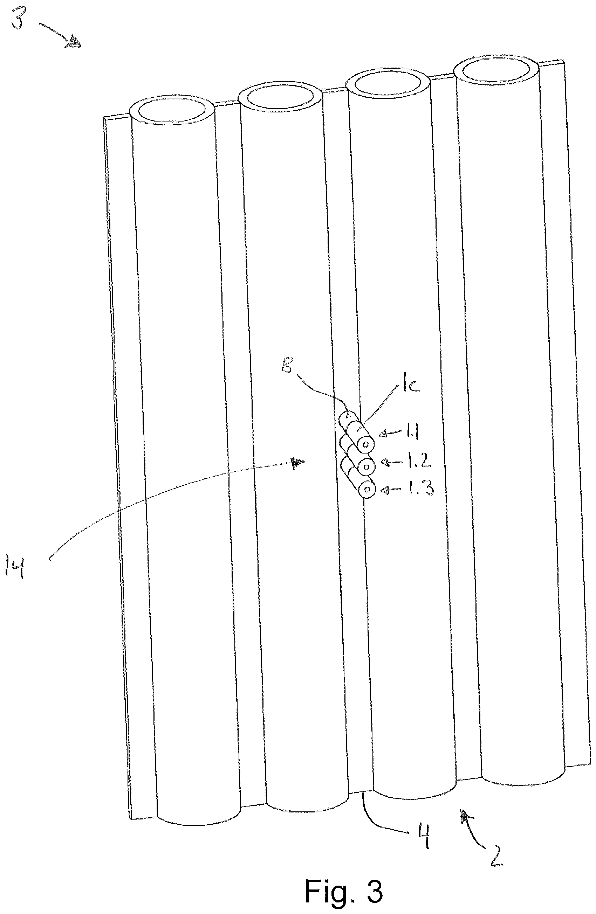

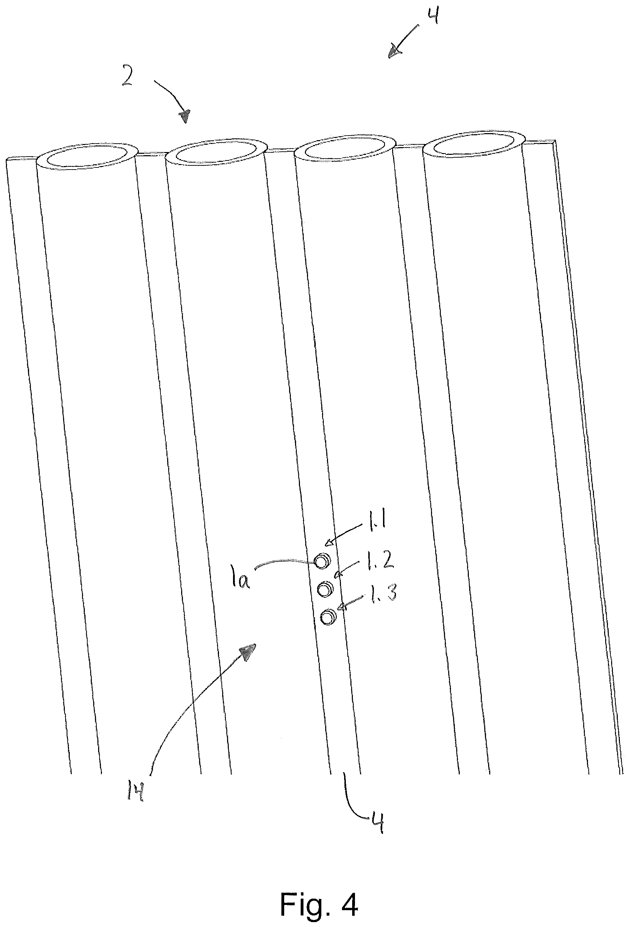

Im Detail zeigt Figur 2 eine perspektivische Ansicht der drei Sonden 1.1, 1.2 und 1.3 aus Sicht des Kesselinneren, wobei zwei Schnittebenen, die senkrecht zur Kasselwand 2 und zueinander sind, dargestellt sind. Die Schnittebenen treffen sich auf der Rotationssymmetrieachse der Sonde 1a. Die Figur 3 zeigt eine perspektivische Ansicht der Anordnung 14 gemäß Figur 2 von Außen auf die Kesselwand 2, und Figur 4 zeigt eine perspektivische Ansicht der der Anordnung 14 gemäß Fig.2 aus dem Inneren des Kessels 3 auf die Kesselwand 2.

Die Anordnung gemäß Figur 1 als auch die Anordnung 14 der Figur 2 verwenden beide elektrochemische Korrosionsmessverfahren wie sie auf dem Fachgebiet bekannt sind. Hierzu wird auf den oben zitierten Stand der Technik als auch auf die Patentschrift EP 0 302 073 verwiesen.

Grundsätzlich gilt für alle Formen der elektrochemischen Korrosionsmessung allgemein, dass:
- die Elektroden ausschließlich durch einen gemeinsamen Elektrolyten und durch die Messelektronik elektrisch verbunden sind, wobei im hier vorliegend verwendeten Messverfahren die Sonde die Elektrode bildet und der Elektrolyt die Ascheschicht ist,
- die Elektrode, die eine annähernd gleiche Temperatur (vorzugsweise maximal 10° K Differenz) haben muss, wie das zu untersuchende Material,
- die Elektrode aus demselben Material sein sollte wie das zu untersuchende Material.

Die Bauart der hier beschrieben Sonden gewährleistet, dass alle bekannten Formen der elektrochemischen Analyse der Korrosion genutzt werden können. Es können durch die Variation der Anzahl der Sonden bzw. Elektroden unterschiedliche Messmethoden genutzt werden. Es sind sowohl Messungen möglich, bei denen die Elektroden nicht polarisiert werden (also keine Spannungen zwischen den Elektroden aufgeprägt werden) also auch Methoden, die die Elektroden polarisieren.

**Bezugszeichenliste:**

| | |
|---|---|
| Sonde | 1 |
| Kesselabschnitt | 1a |
| Befestigungsabschnitt | 1b |
| Sondenabschnitt außerhalb vom Kessel | 1c |
| Kesselwand | 2 |
| Kessel | 3 |
| Steg | 4 |
| Bohrung | 5 |
| Absatz | 6 |
| Thermoelement | 7 |
| Keramikschicht | 8 |
| Spitze | 9 |
| Leitung zur Sonde | 10 |
| Korrosionsmonitor | 11 |
| Leitung zur Wand | 12 |
| Leitung zum Thermoelement | 13 |
| Anordnung von Sonden | 14 |
| Sonden der Anordnung | 1.1, 1.2, 1.3 |

## Patentansprüche

1. Anordnung zur elektrochemischen Korrosionsmessung an einem Kessel (3) oder Wärmetauscher, die Anordnung bestehend aus einer Kessel- oder Wärmetauscherwand (2) in Rohr-Steg-Rohr-Konstruktion, und einer Sonde (1), die zylindrisch ausgebildet ist und die einen Abschnitt zur Aufnahme in einer Bohrung (5) in einem Steg (4) der Kesselwand (2) aufweist, **dadurch gekennzeichnet, dass**
der Abschnitt ein Befestigungsabschnitt (1b) zum Befestigen der Sonde (1) in dem Steg (4) ist, wobei der Befestigungsabschnitt (1b) mit einer Keramikschicht (8) beschichtet ist, die die Sonde elektrisch gegenüber der Kesselwand (2) isoliert,
der beschichtete Befestigungsabschnitt (1b) in einem gekühlten Zustand einen ersten Durchmesser aufweist, der kleiner ist als der Durchmesser der Stegbohrung (5), und im eingebauten Zustand nach Wiedererwärmung einen zweiten größeren Durchmesser aufweist derart, dass zumindest zwischen einem Teil des beschichteten Befestigungsabschnitts und der Stegbohrung (5) Presspassung vorhanden ist.

2. Anordnung nach Anspruch 1, **dadurch gekennzeichnet, dass**
die Sonde (1) einen Kesselabschnitt (1a) aufweist, der sich an den Befestigungsabschnitt (1b) anschließt, und im eingebauten Zustand der Sonde in den Kessel (3) hineinragt.

3. Anordnung nach Anspruch 1 oder 2, **dadurch gekennzeichnet, dass** die Sonde (1) einen auf der Außenseite des Stegs (4) liegenden Abschnitt (1c) mit einem Durchmesser aufweist, der größer ist als der Durchmesser der Bohrung (5) und mit dem Befestigungsabschnitt (1b) einen Absatz (6) bildet, der im eingebauten Zustand der Sonde an der Außenseite des Stegs (4) anliegt und so die Einbautiefe der Sonde definiert, wobei sich die Beschichtung auch über den Absatz (6) erstreckt.

4. Anordnung nach einem der vorhergehenden Ansprüche 2- 3, **dadurch ge kennzeichnet,** dass die Sonde als Hohlkörper ausgebildet ist und in ihr ein Thermoelement (7) zur Erfassung der Sondentemperatur im Kessel- und/oder Befestigungsabschnitt (1a, 1b) angeordnet ist.

5. Anordnung nach einem der vorhergehenden Ansprüche, **dadurch geke nnzeichnet,** dass die Keramikschicht (8) eine Dicke von 50µm bis 200 µm hat.

6. Anordnung nach einem der vorhergehenden Ansprüche 3 - 5, **dadurch ge kennzeichnet,** dass sich die Keramikschicht (8) zumindest teilweise auch über die Oberfläche des Kesselabschnitts (1a) und des außerhalb der Kesselwand liegenden Abschnitts (1c) erstreckt.

7. Anordnung nach einem der vorhergehenden Ansprüche, **dadurch geke nnzeichnet,** dass die Keramikschicht (8) mit ein Plasmaspritzverfahren aufgebracht worden ist.

8. Anordnung nach einem der vorhergehenden Ansprüche, **dadurch geke nnzeichnet,** dass die Keramikschicht (8) aus Aluminiumoxid, Al₂O₃, besteht.

9. Anordnung nach einem der vorhergehenden Ansprüche , **dadurch geke nnzeichnet,** dass die Anordnung mindestens eine weitere Sonde (1.1, 1.2, 1.3) aufweist, die wie die Sonde gemäß einem der Ansprüche 1 - 8 ausgestaltet ist.

10. Anordnung nach Anspruch 9, **dadurch gekennzeichnet, dass** die mindestens zwei Sonden (1.1, 1.2, 1.3) in einem einzigen Steg (4) übereinander angeordnet sind.

11. Anordnung nach Anspruch 9, **dadurch gekennzeichnet, dass** bei einer Verwendung von drei Sonden (1.1, 1.2, 1.3) diese äquidistant in einem einzigen Steg (4) übereinander angeordnet sind.

12. Verfahren zum Einbau einer Sonde (1) in einer Anordnung gemäß einem der Ansprüche 1 - 8 zur Korrosionsmessung in einem Kessel (3), **gekennzeichne t durch**
Kühlen der Sonde (1) auf eine erste Temperatur,
Einführen der Sonde (1) in die Bohrung (5) im Steg (4) der Kesselwand (2), Aufwärmen der Sonde (1) auf eine zweite Temperatur, wodurch die Sonde mittels der Presspassung in dem Steg (4) der Kesselwand gehalten wird.

13. Verfahren nach Anspruch 12, **dadurch gekennzeichnet, dass** das Kühlen auf die erste Temperatur mittels eines Kältemittels, erfolgt.

14. Verfahren nach Anspruch 13, **dadurch gekennzeichnet, dass** als Kältemittel: Trockeneis, Kältemischung oder Flüssiggas eingesetzt wird.

15. Verfahren nach einem der vorhergehenden Ansprüche 12 - 13, **dadurch gekennzeichnet, dass** der Einbau der Sonde (1) während des Betriebes des Kessels (3) erfolgt und dass das Aufwärmen auf die zweite Temperatur passiv durch eine Wärmeeinkopplung in die Sonde (1) über den Kesselsteg (4) und die Keramikschicht (8) erfolgt.

## Claims

1. Apparatus for electrochemically measuring corrosion of a boiler (3) or heat exchanger, the apparatus comprising a boiler or heat exchanger wall (2) having a tube-strip-tube design and a cylindrically formed probe (1) which comprises a portion to be inserted into a bore (5) in a strip (4) of the boiler wall (2), **characterized in that**
the portion is a mounting portion (1b) for mounting the probe (1) in the strip (4), wherein the mounting portion (1b) is coated with a ceramic coating (8) which electrically isolates the probe with respect to the boiler wall (2),
the coated mounting portion (1b) has a first diameter in a cooled condition, wherein the first diameter is smaller than the diameter of the bore (5) in the strip, and has a second larger diameter in a mounted condition following re-heating, such that an interference fit is present at least between a part of the coated mounting portion and the bore (5) in the strip.

2. Apparatus according to claim 1, **characterized in that** the probe (1) comprises a boiler portion (1a) which is adjacent to the mounting portion (1b) and extends into the boiler (3) in a mounted condition of the probe.

3. Apparatus according to claim 1 or 2, **characterized in that** the probe (1) comprises a portion (1c) at the outer surface of the strip (4), the portion (1c) having a diameter which is larger than the diameter of the bore (5) and forms a shoulder (6) together with the mounting portion (1b), wherein the shoulder (6) abuts on the outer surface of the strip (4) in a mounted condition of the probe, thereby defining the mounting depth of the probe, wherein the coating also extends over the shoulder (6).

4. Apparatus according to one of the preceding claims 2 - 3, **characterized in that** the probe is formed as a hollow part, and wherein a thermocouple (7) for detecting the probe temperature inside the boiler and/or mounting portion (1a, 1b) is disposed therein.

5. Apparatus according to one of the preceding claims, **characterized in that** the ceramic coating (8) has a thickness of 50 µm to 200 µm.

6. Apparatus according to one of the preceding claims 3 - 5, **characterized in that** the ceramic coating (8) extends at least partially also over the surface of the boiler portion (1a) and over the portion (1c) outside the boiler wall.

7. Apparatus according to one of the preceding claims, **characterized in that**. the ceramic coating (8) has been applied by a plasma spraying process.

8. Apparatus according to one of the preceding claims, **characterized in that**. the ceramic coating (8) consists of aluminium oxide Al₂O₃.

9. Apparatus according to one of the preceding claims, **characterized in that** the apparatus comprises at least one additional probe (1.1, 1.2, 1.3), which is designed according to one of claims 1 - 8.

10. Apparatus according to claim 9, **characterized in that** the at least two probes (1.1, 1.2, 1.3) are arranged in a single strip (4) one above the other.

11. Apparatus according to claim 9, **characterized in that**, when using three probes (1.1, 1.2, 1.3), these probes are arranged in a single strip (4) one above the other at a same distance.

12. Method for mounting a probe (1) in an apparatus according one of claims 1 - 8 for measuring corrosion in a boiler (3), **characterized by**
cooling the probe (1) to a first temperature,
inserting the probe (1) into the bore (5) in the strip (4) of the boiler wall (2),
heating the probe (1) to a second temperature, wherein the probe is fixed in the strip (4) of the boiler wall by means of an interference fit.

13. Method according to claim 12, **characterized in that** the cooling to a first temperature is carried out by means of a refrigerant.

14. Method according to claim 13, **characterized in that** dry ice, freezing agent or liquid gas is used as the refrigerant.

15. Method according to one of the preceding claims 12 - 13, **characterized in that** the mounting of the probe (1) is carried out during operation of the boiler (3) and that heating to the second temperature is carried out passively by heating the probe (1) via the boiler strip (4) and the ceramic coating (8).

## Revendications

1. Dispositif pour mesurer de manière électrochimique la corrosion d'une chaudière (3) ou d'un échangeur thermique, le dispositif comprenant une paroi (2) de chaudière ou d'échangeur thermique ayant une conception du type tube-bande-tube et une sonde de forme cylindrique (1) qui comprend une portion à insérer dans un alésage (5) dans une bande (4) de la paroi de chaudière (2), **caractérisé en ce que**
la portion est une portion de montage (1b) pour monter la sonde (1) dans la bande (4), la portion de montage (1b) étant revêtue d'un revêtement en céramique (8) qui isole électriquement la sonde par rapport à la paroi de chaudière (2),
la portion de montage revêtue (1b) a un premier diamètre dans un état à froid, le premier diamètre étant inférieur au diamètre de l'alésage (5) dans la bande, et a un deuxième diamètre plus grand dans un état monté à la suite d'un réchauffage, de sorte qu'un ajustement serré est présent au moins entre une partie de la portion de montage revêtue et l'alésage (5) dans la bande.

2. Dispositif selon la revendication 1, **caractérisé en ce que** la sonde (1) comprend une portion de chaudière (1a) qui est adjacente à la portion de montage (1b) et qui s'étend dans la chaudière (3) dans un état monté de la sonde.

3. Dispositif selon la revendication 1 ou 2, **caractérisé en ce que** la sonde (1) comprend une portion (1c) au niveau de la surface extérieure de la bande (4), la portion (1c) ayant un diamètre qui est plus grand que le diamètre de l'alésage (5) et formant un épaulement (6) conjointement avec la portion de montage (1b), l'épaulement (6) buttant sur la surface extérieure de la bande (4) dans un état monté de la sonde, définissant ainsi la profondeur de montage de la sonde, le revêtement s'étendant aussi sur l'épaulement (6).

4. Dispositif selon l'une quelconque des revendications 2-3 précédentes, **caractérisé en ce que** la sonde est formée avec une partie en creux, et un thermocouple (7) destiné à détecter la température de la sonde à l'intérieur de la chaudière et/ou de la portion de montage (1a, 1b) est disposé dans celle-ci.

5. Dispositif selon l'une quelconque des revendications précédentes, **caractérisé en ce que** le revêtement en céramique (8) a une épaisseur de 50 µm à 200 µm.

6. Dispositif selon l'une quelconque des revendications 3-5 précédentes, **caractérisé en ce que** le revêtement en céramique (8) s'étend aussi au moins partiellement sur la surface de la portion de chaudière (1a) et sur la portion (1c) à l'extérieur de la paroi de chaudière.

7. Dispositif selon l'une quelconque des revendications précédentes, **caractérisé en ce que** le revêtement en céramique (8) a été appliqué par un procédé de projection de plasma.

8. Dispositif selon l'une quelconque des revendications précédentes, **caractérisé en ce que** le revêtement en céramique (8) est constitué d'oxyde d'aluminium Al₂O₃.

9. Dispositif selon l'une quelconque des revendications précédentes, **caractérisé en ce que** le dispositif comprend au moins une sonde additionnelle (1.1, 1.2, 1.3), qui est conçue selon l'une quelconque des revendications 1 à 8.

10. Dispositif selon la revendication 9, **caractérisé en ce que** lesdites au moins deux sondes (1.1, 1.2, 1.3) sont agencées dans une seule bande (4) l'une au-dessus de l'autre.

11. Dispositif selon la revendication 9, **caractérisé en ce que**, lors de l'utilisation de trois sondes (1.1, 1.2, 1.3), ces sondes sont agencées dans une seule bande (4) l'une au-dessus de l'autre à une même distance.

12. Procédé pour monter une sonde (1) dans un dispositif selon l'une quelconque des revendications 1-8 pour mesurer la corrosion dans une chaudière (3), **caractérisé par**
refroidir la sonde (1) à une première température,
insérer la sonde (1) dans l'alésage (5) dans la bande (4) de la paroi de chaudière (2),
chauffer la sonde (1) à une deuxième température, la sonde étant fixée dans la bande (4) de la paroi de chaudière au moyen d'un ajustement serré.

13. Procédé selon la revendication 12, **caractérisé en ce que** le refroidissement à une première température est réalisé au moyen d'un réfrigérant.

14. Procédé selon la revendication 13, **caractérisé en ce que** l'on utilise comme réfrigérant de la neige carbonique, un agent de congélation ou du gaz liquide.

15. Procédé selon l'une quelconque des revendications 12-13 précédentes, **caractérisé en ce que** le montage de la sonde (1) est réalisé pendant le fonctionnement de la chaudière (3) et **en ce que** le chauffage à la deuxième température est réalisé de manière passive en chauffant la sonde (1) par l'intermédiaire de la bande de chaudière (4) et du revêtement en céramique (8).
